# EUROPÄISCHE PATENTSCHRIFT

(11) **EP 3 445 571 B1**
(45) Veröffentlichungstag und Bekanntmachung des Hinweises auf die Patenterteilung: **26.02.2020**
(21) Anmeldenummer: 17715757.5
(22) Anmeldetag: 11.04.2017
(51) Int. Cl.: B29C 70/06, C08G 18/48, C08G 18/66, C08J 5/04, C08G 18/76, C08G 18/79, C08K 3/32, C08G 18/20, C08G 18/22, C08G 18/32, C08L 75/04

(54) **VERFAHREN ZUR HERSTELLUNG VON PULTRUDATEN AUF BASIS VON POLYURETHAN**
PROCESS FOR THE PREPARATION OF POLYURETHANE BASED PULTRUDATES
PROCÉDÉ DE PULTRUSION ET PRODUIT A BASE DE POLYURETHANE OBTENU

(30) Priorität: 21.04.2016 EP 16166289
(43) Veröffentlichungstag der Anmeldung: 27.02.2019
(73) Patentinhaber: BASF SE, 67056 Ludwigshafen am Rhein (DE)
(72) Erfinder: NEUHAUS, Bert, 46535 Dinslaken (DE); GOESCHEL, Julia, 28201 Bremen (DE)
(74) Vertreter: BASF IP Association
(86) Internationale Anmeldenummer: PCT/EP2017/058629
(87) Internationale Veröffentlichungsnummer: WO 2017/182323

(56) Entgegenhaltungen:
- US-A1- 2012 252 973

## Beschreibung

Die vorliegende Erfindung betrifft ein Verfahren zur Herstellung eines Pultrudats beidem man (a) Di- oder Polyisocyanate, (b) Verbindungen mit mindestens zwei gegenüber Isocyanaten reaktiven Gruppen, (c) Katalysator, (d) Formtrennmittel und gegebenenfalls (e) weitere Hilfs- und Zusatzstoffe zu einem Pultrusionsharzsystem vermischt und ein Fasermaterial damit benetzt und aushärtet, wobei die Di und Polyisocyanate (a) mit einer Polyolkomponente (B), enthaltend Verbindungen mit mindestens zwei gegenüber Isocyanaten reaktiven Gruppen (b), Katalysatoren (c) Formtrennmittel (d) und gegebenenfalls weitere Hilfs- und Zusatzstoffe (e) vermischt werden und die Polyolkomponente (B)einen pH-Wert im Bereich von 6,5 bis 8,5 aufweist. Weiter betrifft die vorliegende Erfindung ein Pultrudat, erhältlich nach einem solchen Verfahren.

Die Pultrusion, auch Strangziehverfahren genannt, ist ein kontinuierliches Verfahren zur Herstellung von faserverstärkten Profilen mit konstantem Querschnitt. Eine Pultrusionsanlage besteht typischerweise aus einer Imprägniereinheit und einem beheizten Werkzeug sowie einer Abzugsanlage, die den Prozess in Gang hält. Die Imprägnierung der Fasern erfolgt in einem offenen Bad oder in einer geschlossenen Injektionsbox. Hier wird das Verstärkungsmaterial, beispielsweise Glasfaserrovings oder Glasfasermatten, mit dem Harz benetzt. Im beheizten Werkzeug erfolgt dann Formgebung und die Aushärtung des Composites. Das fertige Profil wird mittels einer Abzugsanlage aus dem Werkzeug gezogen und abschließend in die gewünschten Längen geschnitten.

Um den Pultrusionsprozess möglichst effizient zu gestalten werden hohe Prozessgeschwindigkeiten bei sehr guten mechanischen Eigenschaften des Pultrudats und einer hohen Oberflächengüte angestrebt. Dabei ist ein geringes Anhaften des Composites an der Werkzeugoberfläche des Formwerkzeugs wesentlich.

Die Verwendung von zweikomponentigen Polyurethansystemen für den Pultrusionsprozess wurde bereits von Bayer, Huntsman, Milgard Manufacturing Incorporated, Resin Systems Inc. und weiteren beschrieben. Es werden hauptsächlich Polyetherpolyole mit einer Funktionalität von 3.0 eingesetzt, die in Gegenwart von Aminen bzw. Metallkomplexen als Katalysatoren sowie diversen Additiven mit Isocyanaten, häufig polymerem MDI, umgesetzt werden. Dabei hat sich gezeigt, dass sich mit zunehmender Prozessgeschwindigkeit die Oberflächengüte verschlechtert. Häufig wird ausreagiertes Polyurethan bzw. PU-Puder auf der Profiloberfläche beobachtet. Darüber hinaus verschlechtert sich die Benetzungsqualität bei hohen Abzugsgeschwindigkeiten und damit die mechanischen Eigenschaften der entsprechenden Pultrudate. Diese Phänomene limitieren wiederum die maximale Prozessgeschwindigkeit.

Huntsman begegnet diesem Problem in WO 2005/049301 durch den Einsatz zweier Metallkatalysatoren. Bayer setzt Systeme auf Basis von DMC-Polyolen (US 2008/0090921) oder Graftpolyolen (US 2008/0087373) ein, bzw. verwendet nicht-mischbare PU-Systeme (US 2008/0090996). Darüber hinaus erwähnen sowohl Bayer als auch Huntsman die prinzipielle Verwendung von Säuren zur teilweisen Neutralisierung, also Blockierung, der Aminkatalyse. Als konkrete Beispiele werden in WO 2005038118 Ameisensäure, Essigsäure, 2-Ethylhexansäure und Ölsäure genannt.

Milgard Manufacturing Incorporated beschreibt in US 2007/0113983, US 2007/0116941 und US 2007/0117921 die prinzipielle Möglichkeit dem Polyurethansystem zur Verbesserung der Oberflächengüte polymere Additive zuzusetzen, die den Schrumpf des Harzes verringern. In einer Konzentration von bevorzugt 4 bis 10%, bezogen auf das Gesamtharzsystem, werden diese sogenannten "low profile additives" hinzugesetzt. Unter polymeren Additiven versteht man hier Polystyrole, Styrol-Acrylat Copolymere, Methacrylatharze, Polyvinylacetate und geschützte Polypropylenoxide.

WO 2011/067246beschreibt ein Pultrusionsverfahren bei dem man eine höherfunktionelle Säure, die einen Siedepunkt von mindestens 200 °C aufweist zum Pultrusionsharzsystem zugibt. Dadurch werden zwar die Abzugskräfte verringert und die Oberfläche des Pultrudats verbessert, diese Parameter sind aber weiter verbesserungswürdig.

Aufgabe der vorliegenden Erfindung war daher ein Verfahren zur Herstellung von Pultrudaten zu liefern, bei dem die Abzugskräfte des Pultrudats aus der Form weiter verringert sind und das zu einer verbesserten Oberfläche des Pultrudats führt. Dies ist insbesondere für technisch erforderliche hohe Abzugsgeschwindigkeiten von mehr als 1 m/Minute und/oder komplexe Formteilgeometrien relevant

Diese Aufgabe wurde gelöst durch ein Verfahren zur Herstellung eines Pultrudats beidem man (a) Di- oder Polyisocyanate, (b) Verbindungen mit mindestens zwei gegenüber Isocyanaten reaktiven Gruppen, (c) Katalysator, (d) Formtrennmittel und gegebenenfalls (e) weitere Hilfs- und Zusatzstoffe zu einem Pultrusionsharzsystem vermischt und ein Fasermaterial damit benetzt und aushärtet, wobei die Di und Polyisocyanate (a) mit einer Polyolkomponente (B), enthaltend Verbindungen mit mindestens zwei gegenüber Isocyanaten reaktiven Gruppen (b), Katalysatoren (c) Formtrennmittel (d) und gegebenenfalls weitere Hilfs- und Zusatzstoffe (e) vermischt werden und die Polyolkomponente (B) einen pH-Wert im Bereich von 6,5 bis 8,5 aufweist. Weiter betrifft die vorliegende Erfindung ein Pultrudat, erhältlich nach einem solchen Verfahren.

Dabei wird im Rahmen der Erfindung unter einem Pultrusionsharzsystem ein System, bestehend aus unterschiedlichen Komponenten verstanden, das nach dem Zusammenmischen der Komponenten geeignet ist, mit Fasermaterial ein Pultrudat zu bilden.

Als Di- oder Polyisocyanate (a) können alle zur Herstellung von Polyurethanen bekannten aliphatischen, cycloaliphatischen oder aromatischen Isocyanaten eingesetzt werden. Beispiele sind 2,2'-, 2,4- und 4,4'-Diphenylmethandiisocyanat, die Mischungen aus monomeren Diphenylmethandiisocyanaten und höherkernigen Homologen des Diphenylmethandiisocyanats (polymeres MDI), Isophorondiisocyanat (IPDI) oder dessen Oligomere, Toluylendiisocyanat (TDI), beispielsweise Isomere des Toluylendiisocyanats, wie 2,4- oder 2,6-Toluylendiisocyanat oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Vorzugsweise werden als Di- oder Polyisocyanate (a) Isocyanate auf Basis des Diphenylmethandiisocyanats eingesetzt, insbesondere polymeres MDI. Vorzugsweise weist das Di- und Polyisocyanate (a) eine Funktionalität von 2,0 bis 2,9, besonders bevorzugt 2,1 bis 2,8 auf. Die Viskosität der Di- oder Polyisocyanate (a) bei 25 °C nach DIN 53019-1 bis 3 liegt dabei vorzugsweise zwischen 5 und 600 mPas und besonders bevorzugt zwischen 10 und 300 mPas.

Di- und Polyisocyanate (a) können auch in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Verbindungen mit mindestens zwei gegenüber Isocyanaten reaktiven Gruppen (Bestandteil (a-2)), zum Prepolymer umgesetzt werden. Der NCO-Gehalt erfindungsgemäßer Polyisocyanatprepolymere beträgt vorzugsweise von 20 bis 33 Gew.-% NCO, besonders bevorzugt von 25 bis 32 Gew.-% NCO.

Verbindungen mit mindestens zwei gegenüber Isocyanaten reaktiven Gruppen (a-2) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Verbindungen mit mindestens zwei gegenüber Isocyanaten reaktiven Gruppen Polyether- oder Polyesterole, wie die nachfolgend unter (b) beschriebenen, eingesetzt werden. Vorzugsweise werden als Verbindungen mit mindestens zwei gegenüber Isocyanaten reaktiven Gruppen (a-2) Polyether- oder Polyesterole, enthaltend sekundäre OH-Gruppen, eingesetzt, wie beispielsweise Polypropylenoxyd. Die Polyether- oder Polyesterole, besitzen dabei vorzugsweise eine Funktionalität von 2 bis 4, besonders bevorzugt von 2 bis 3.

Besonders bevorzugt werden keine Polyisocyanatprepolymere eingesetzt.

Als Verbindungen mit mindestens zwei gegenüber Isocyanaten reaktiven Gruppen (b), im Rahmen dieser Erfindung auch als "Polyole" bezeichnet, können alle Verbindungen eingesetzt werden, die zumindest zwei gegenüber Isocyanaten reaktive Gruppen, wie OH-, SH-, NH-, NH₂-, - COOH und CH-acide Gruppen aufweisen, wobei der Anteil an sekundären OH-Gruppen, bezogen auf die Anzahl an gegenüber Isocyanaten reaktiven Gruppen, mindestens 50 %, bevorzugt mindestens 60 %, besonders bevorzugt mindestens 70 % und insbesondere mindestens 80 % beträgt.

Gewöhnlich werden Polyetherole und/oder Polyesterole mit 2 bis 8 mit Isocyanat reaktiven Wasserstoffatomen und niedermolekulare Polyole, wie Glycerin, Dipropylenglykol und/oder Tripropylenglykol, eingesetzt. Die OH-Zahl dieser Verbindungen liegt üblicherweise im Bereich von 30 bis 2000 mg KOH /g, vorzugsweise im Bereich von 40 und 1000 mg KOH/g. Dabei liegt die mittlere OH-Zahl aller eingesetzten Verbindungen mit mindestens zwei gegenüber Isocyanaten reaktiven Gruppen (b) bei 100 bis 1000 mg KOH/g, vorzugsweise bei 300 bis 900 mg KOH/g.

Die Polyetherole werden nach bekannten Verfahren, beispielsweise durch anionische Polymerisation von Alkylenoxiden unter Zusatz mindestens eines Startermoleküls, das 2 bis 8, vorzugsweise 2 bis 6 und besonders bevorzugt 2 bis 4 reaktive Wasserstoffatome gebunden enthält, in Gegenwart von Katalysatoren erhalten. Als Katalysatoren können Alkalihydroxide, wie Natrium- oder Kaliumhydroxid oder Alkalialkoholate, wie Natriummethylat, Natrium- oder Kaliumethylat oder Kaliumisopropylat, oder bei kationischer Polymerisation Lewis-Säuren, wie Antimonpentachlorid, Bortrifluorid-Etherat oder Bleicherde als Katalysatoren eingesetzt werden. Weiter können als Katalysatoren auch Doppelmetallcyanidverbindungen, sogenannte DMC-Katalysatoren, eingesetzt werden.

Vorzugsweise werden als Alkylenoxide eine oder mehrere Verbindungen mit 2 bis 4 Kohlenstoffatomen im Alkylenrest, wie Tetrahydrofuran, Ethylenoxid, 1,2-Propylenoxid, oder 1,2- bzw. 2,3-Butylenoxid, jeweils alleine oder in Form von Mischungen, und vorzugsweise 1,2-Propylenoxid, und/oder Ethylenoxid, insbesondere 1,2-Propylenoxid eingesetzt.

Als Startermoleküle kommen beispielsweise Ethylenglycol, Diethylenglycol, Glycerin, Trimethylolpropan, Pentaerythrit, Zuckerderivate, wie Saccharose, Hexitderivate, wie Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin sowie andere zwei oder mehrwertige Alkohole oder ein oder mehrwertige Amine in Betracht.

Die eingesetzten Polyesteralkohole werden zumeist durch Kondensation von mehrfunktionellen Alkoholen mit 2 bis 12 Kohlenstoffatomen, wie Ethylenglycol, Diethylenglycol, Butandiol, Trimethylolpropan, Glycerin oder Pentaerythrit, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und den Isomeren von Naphthalindicarbonsäuren oder deren Anhydriden, hergestellt.

Als weitere Ausgangsstoffe bei der Herstellung der Polyester können auch hydrophobe Stoffe mit verwendet werden. Bei den hydrophoben Stoffen handelt es sich um wasserunlösliche Stoffe die einen unpolaren organischen Rest enthalten sowie über mindestens eine reaktive Gruppe, ausgewählt aus Hydroxyl, Carbonsäure, Carbonsäurester oder Mischungen daraus, verfügen. Das Äquivalentgewicht der hydrophoben Materialen liegt vorzugsweise zwischen 130 und 1000 g/mol. Verwendet werden können zum Beispiel Fettsäuren, wie Stearinsäure, Ölsäure, Palmitinsäure, Laurinsäure oder Linolsäure, sowie Fette und Öle, wie zum Beispiel Rizinusöl, Maisöl, Sonnenblumenöl, Sojabohnenöl, Kokosnussöl, Olivenöl oder Tallöl. Enthalten Polyester hydrophobe Stoffe, beträgt der Anteil der hydrophoben Stoffe am Gesamtmonomergehalt des Polyesteralkohols vorzugsweise 1 bis 30 Mol-%, besonders bevorzugt 4 bis 15 Mol-%.

Die eingesetzten Polyesterole haben vorzugsweise eine Funktionalität von 1,5 bis 5, besonders bevorzugt 1,8 - 3,5.

In einer besonders bevorzugten Ausführungsform werden als Verbindungen mit gegenüber Isocyanaten reaktiven Gruppen (b) Polyetherole, insbesondere ausschließlich Polyetherole eingesetzt. Vorzugsweise weisen die Polyetherole eine reale mittlere Funktionalität von 2 bis 4, besonders bevorzugt 2,5 bis 3,5 insbesondere 2,8 bis 3,2, eine OH-Zahl von 300 bis 900 mg KOH/g und einen Gehalt an sekundären OH-Gruppen von mindestens 50 %, bevorzugt mindestens 60 %, besonders bevorzugt mindestens 70 % und insbesondere mindestens 80 % auf. Dabei wird als Polyetherol vorzugsweise Polyetherol auf Basis von auf Basis von Glycerin als Starter und 1,2 Propylenoxid eingesetzt.

Als Katalysatoren (c) können alle zur Polyurethanherstellung üblichen Katalysatoren eingesetzt werden. Solche Katalysatoren werden beispielsweise im "Kunststoffhandbuch, Band 7, Polyurethane", Carl Hanser Verlag, 3. Auflage 1993, Kapitel 3.4.1 beschrieben. Dabei kommen beispielsweise organische Metallverbindungen, wie Zinn-, Zink-, Titan-, Zirkonium-, Eisen-, Quecksilber- oder Bismuthkomplexe vorzugsweise organische Zinnverbindungen, wie Zinn-(II)-salze von organischen Carbonsäuren, z.B. Zinn-(II)-acetat, Zinn-(II)-octoat, Zinn-(II)-ethylhexanoat und Zinn-(II)-laurat und die Dialkylzinn-(IV)-salze von organischen Carbonsäuren, z.B. Dibutylzinndiacetat, Dibutylzinndilaurat, Dibutylzinnmaleat und Dioctylzinndiacetat, sowie Phenylquecksilberneodecanoat, Bismutcarboxylate, wie Bismut(III)-neodecanoat, Bismut-2-etyhlhexanoat und Bismut-octanoat oder Mischungen in Betracht. Weitere mögliche Katalysatoren sind stark basische Aminkatalysatoren. Beispiele hierfür sind Amidine, wie 2,3-Dimethyl-3,4,5,6-tetrahydropyrimidin, tertiäre Amine, wie Triethylamin, Triethylendiamin, Tributylamin, Dimethylbenzylamin, N-Methyl-, N-Ethyl-,N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan, 1,8-Diazabicyclo-(5,4,0)-undecen-7-en und Alkanolaminverbindungen, wie Triethanolamin, Triisopropanolamin, N-Methyl- und N-Ethyl-diethanolamin und Dimethylethanolamin. Die Katalysatoren können einzeln oder als Mischungen verwendet werden. Gegebenenfalls werden als Katalysatoren (c) Mischungen aus Metallkatalysatoren und basischen Aminkatalysatoren verwendet. Vorzugsweise enthalten die Katalysatoren (c) Aminkatalysatoren, besonders bevorzugt werden keine Metallkatalysatoren eingesetzt.

In einer besonderen Ausführungsform werden diese Katalysatoren, insbesondere die Aminkatalysatoren, als blockierte Katalysatoren eingesetzt, beispielsweise mit Protonendonatoren blockierte Katalysatoren. Als Protonendonatoren werden vorzugsweise Carbonsäuren oder Phenole und/oder weitere aromatische Alkohole eingesetzt. Besonders bevorzugt werden als Protonendonatoren aromatische Alkohole eingesetzt. Dabei beträgt das Molverhältnis von als Protonendonator wirkende Gruppen im Protonendonator zu protonierbaren Amingruppen im Aminkatalysator vorzugsweise 0,9 : 1,0 bis 1,1 : 1,0. Besonders bevorzugt wird dabei als blockierter Aminkatalysator blockiertes 1,8-Diaza-bicyclo(5.4.0)undec-7-en eingesetzt. Als mögliche Blockierungsmittel können Phenole oder Carbonsäurederivate eingesetzt werden, bespielsweise Phenol oder Phthalsäure.

Der Anteil des Katalysators (c) beträgt dabei vorzugsweise 0,05 bis 10 Gew.-%, besonders bevorzugt 0,1 bis 5 Gew.-% und insbesondere 0,1 bis 2,5 Gew.-%, bezogen auf das Gesamtgewicht der Komponenten (b) bis (e). Vorzugsweise wird dabei der Katalysator so eingesetzt, dass die Gelzeit des erfindungsgemäßen Pultrusionsharzsystems nach Vermischen der Komponenten (a) bis (e) bei 25 °C größer als 10 Minuten, besonders bevorzugt größer als 12 Minuten und kleiner 60 Minuten und insbesondere größer als 15 und kleiner als 60 Minuten beträgt. Weiter wird der Katalysator so gewählt, dass eine vollständige Aushärtung des erfindungsgemäßen Pultrusionsharzsystems nach Vermischen der Komponenten (a) bis (e) bei 220 °C innerhalb von 60 Sekunden, besonders bevorzugt von 0 bis 45 Sekunden und insbesondere von 5 bis 30 Sekunden erfolgt.

Dabei wird die Offene Zeit bestimmt als die Zeit, in der die Viskosität der Reaktionsmischung bei konstanter Temperatur sich soweit erhöht, dass die erforderliche Rührkraft die gegebene Rührkraft des Shyodu Gel Timers, Typ 100, Version 2012 übersteigt. Hierzu wurden jeweils 200 g Reaktionsmischung angesetzt, in einem Speedmixer bei 1950 rpm 30 s vermischt und 130 g der Mischung bei Raumtemperatur in einem PP-Kunststoffbecher mit Durchmesser 7 cm mittels einem Shyodu Gel-Timer, Typ 100, Version 2012 und einem dazugehörigen Drahtrührer bei 20 rpm gerührt, bis die Viskosität und damit die erforderliche Rührkraft für die reaktive Mischung die Rührkraft des Gel-Timers überstieg.

Zur Bestimmung der vollständigen Aushärtung bei 220 °C werden die Komponenten zur Herstellung der Polyurethanreaktionsmischung bei Raumtemperatur in einen Becher eingewogen und mittels Speed-Mixer 30 Sekunden bei 2000 Umdrehungen pro Minute miteinander verrührt. 10 mL des Systems werden mit Hilfe einer Pasteurpipette auf eine Platte mit einer Oberflächentemperatur von 220 °C gegeben. Die Zeit (in s) zwischen Auftragen auf die Platte und kompletter Aushärtung entspricht der Härtungszeit bei der entsprechenden Temperatur. Komplette Aushärtung ist erreicht, wenn die Probe bei Berührung mit einem Holzspatel nicht mehr klebt.

Als Formtrennmittel (d) können alle bei der Herstellung von Polyurethanen üblichen Trennmittel verwendet werden, beispielsweise langkettige Carbonsäuren, insbesondere Fettsäuren, wie Stearinsäure, Amine langkettiger Carbonsäuren, wie Stearinamid, Fettsäureester, Metallsalze langkettiger Carbonsäuren, wie Zinkstearat, oder Silicone. Besonders geeignet sind die speziell für die Pultrusion erhältlichen Internen Trennmittel, z.B. von Axel Plastics oder der Firma Würtz. In einer besonders bevorzugten Ausführungsform wird als internes Trennmittel das Trennmittel Pul5 K der Firma Würtz eingesetzt.

Formtrennmittel werden üblicherweise in einer Menge von 0,5 bis 10 Gew.-%, vorzugsweise 1 bis 6 Gew.-% und insbesondere 1,5 bis 4 Gew.-%, bezogen auf das Gesamtgewicht der Komponenten (a) bis (e) verwendet.

Als Hilfs- und Zusatzstoffe (e) können alle zur Herstellung von Polyurethanen bekannten Hilfs- und Zusatzstoffe verwendet werden. Genannt seien beispielsweise oberflächenaktive Substanzen, Haftvermittler, Füllstoffe, Farbstoffe, Pigmente, Flammschutzmittel, Hydrolyseschutzmittel, Viskositätserniedriger, Wasserfänger, Entschäumer sowie fungistatisch und bakteriostatisch wirkende Substanzen. Solche Substanzen sind bekannt und beispielsweise in "Kunststoffhandbuch, Band 7, Polyurethane", Carl Hanser Verlag, 3. Auflage 1993, Kapitel 3.4.4 und 3.4.6 bis 3.4.11 beschrieben.

So können beispielsweise als Additive zur Wasseradsorption Aluminosilikate, ausgewählt aus der Gruppe der Natriumaluminosilikate, Kaliumaluminosilikate, Calciumaluminosilikate, Cäsiumaluminosilikate, Bariumaluminosilikate, Magnesiumaluminosilikate, Strontiumaluminosilikate, Natriumaluminophosphate, Kaliumaluminophosphate, Calciumaluminophosphate und Mischungen davon, eingesetzt werden. Besonders bevorzugt werden Mischungen von Natrium-, Kalium- und Calciumaluminosilikaten in Ricinusöl als Trägersubstanz verwendet.

Vorzugsweise hat das Additiv zur Wasserabsorption eine zahlengemittelte Partikelgröße von nicht größer als 200 µm, besonders bevorzugt nicht größer als 150 µm und insbesondere nicht größer als 100 µm. Vorzugsweise beträgt die Porenweite des erfindungsgemäßen Additivs zur Wasserabsorption 2 bis 5 Ängstroem.

Wenn ein Additiv zur Wasserabsorption zugegeben wird, geschieht dies vorzugsweise in Mengen größer einem Gewichtsteil, besonders bevorzugt im Bereich von 0,5 bis 5 Gewichtsteilen, bezogen auf das Gesamtgewicht der Komponenten (b) bis (e).

Als Haftvermittler können Silane, wie Isocyanatsilane, Epoxysilane oder Aminosilane eingesetzt werden. Solche Substanzen sind beispielsweise in E. P. Plueddemann, Silane Coupling Agents, 2nd ed., Plenum Press, New York, 1991 und in2. K. L. Mittal, ed., Silanes and Other Coupling Agents, VSP, Utrecht, 1992 beschrieben.

Als Viskositätserniedriger können beispielsweise γ-Butyrolacton, Propylencarbonat, aber auch Reaktivverdünner wie Dipropylenglykol, Diethylenglykol und Tripropylengykol eingesetzt werden.

Das erfindungsgemäße Pultrusionsharzsystem enthält vorzugsweise weniger als 2 Gew.-%, besonders bevorzugt weniger als 1 Gew.-% Stoffe, die einen Siedepunkt von kleiner 200 °C bei Normaldruck aufweisen. Vorzugsweise weist das Pultrusionsharzsystem unmittelbar nach Vermischen der Komponenten (a) bis (e) eine Viskosität von kleiner 1500 mPas, besonders bevorzugt kleiner 1200 mPas und insbesondere kleiner 1000 mPas bei 25 °C nach DIN 53019-1 bis 3 auf. Dabei werden die Komponenten (a) bis (e) vorzugsweise in solchen Mengenverhältnissen vermischt, dass der Isocyanatindex 90 bis 140, besonders bevorzugt 100 bis 130 und insbesondere 115 bis 125 beträgt. Dabei wird unter dem Isocyanatindex im Rahmen der vorliegenden Erfindung das stöchiometrische Verhältnis an Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, verstanden, nicht aber die Isocyanatgruppe selbst.

Bei diesem Verfahren werden die Komponenten eines erfindungsgemäßen Pultrusionsharzsystems zu einer Polyurethanreaktionsmischung vermischt, mit der erhaltenen Reaktionsmischung wird ein Fasermaterial benetzt. Dabei wird üblicherweise im 2-Komponentenverfahren vorgegangen. Dazu wird zuerst eine Polyolkomponente (B), enthaltend Verbindungen mit mindestens zwei gegenüber Isocyanaten reaktiven Gruppen (b) und Katalysator (c) sowie Formtrennmittel (d) und gegebenenfalls weitere Hilfs und Zusatzstoffe (e) hergestellt. Diese wird dann mit den Isocyanaten zum Pultrusionsharzsystem umgesetzt.

Anschließend wird das benetzte Fasermaterial geformt und die Reaktionsmischung ausgehärtet. Dabei wird im Rahmen der Erfindung die Mischung der Komponenten (a) bis (e) bei Reaktionsumsätzen kleiner 90 %, bezogen auf die Isocyanatgruppen, als Reaktionsmischung bezeichnet.

Die Vermischung der Komponenten des erfindungsgemäßen Pultrusionsharzsystems kann dabei in für die Herstellung von Polyurethanbasierten Reaktionsmischungen üblicher Weise erfolgen, beispielsweise im Hochdruck oder Niederdruckverfahren.

Es ist erfindungswesentlich, dass zum Zeitpunkt des Vermischens mit den Di- oder Polyisocyanaten (a) die Verbindungen mit mindestens zwei gegenüber Isocyanaten reaktiven Gruppen (b) einen pH-Wert im Bereich von 6,5 bis 8,5, vorzugsweise 7,0 bis 8,5 und insbesondere 7,5 bis 8,4 aufweisen. Wird im 2-Komponentenverfahren vorgegangen ist es erfindungswesentlich, dass die Polyolkomponente (B) zum Zeitpunkt des Vermischens mit den Di- und Polyisocyanaten (b) den entsprechenden pH-Wert aufweist.

Die Einstellung des pH-Werts kann durch den Zusatz von Substanzen mit einer Wirkung auf den pH-Wert erfolgen, beispielsweise durch den Zusatz von Wasserstoffdonatoren oder Wasserstoffakeptoren. Als mögliche Wasserstoffdonatoren sind beispielsweise Carbonsäuren, wie Essigsäure oder Citronensäure, oder Mineralsäuren, wie Phosphorsäure genannt. Als mögliche Protonenakzeptoren sind Basen, wie Aminverbindungen oder Salze schwacher Säuren, wie Alkalimetallsalze von Carbonsäuren oder mehrbasiger Mineralsäuren, wie Phosphorsäuer genannt. In einer besonders bevorzugten Ausführungsform werden Protonendonatoren und Protonenakeptoren gemeinsam in einem Mischungsverhältnis eingesetzt, dass der pH-Wert Verbindungen mit mindestens zwei gegenüber Isocyanaten reaktiven Gruppen (b) im Bereich von 6,5 bis 8,5 stabilisiert wird. Dabei weisen die Substanzen, die eine Wirkung auf den pH-Wert zeigen, vorzugsweise keine gegenüber Isocyanat reaktiven Gruppen auf, wie Carbonsäuregruppen oder Aminogruppen. Eine besonders bevorzugte Kombination aus Protonendonatoren und Protonenakeptoren ist dabei der Einsatz von Alkalimetallhydrogenphosphaten, insbesondere mit Natriumhydrogenphosphaten. Insbesondere wird ein System aus Dinatriumhydrogenphosphat und Natriumdihydrogenphosphat eingesetzt.

Dabei wird vorzugsweise der Gehalt an Wasser in der pH-stabilisierten Komponente, beispielsweise den Verbindungen mit mindestens zwei gegenüber Isocyanaten reaktiven Gruppen (b) oder der Polyolkomponente (B) minimiert. So beträgt vorzugsweise der Gehalt an Wasser in den Komponenten (b) bis (e) maximal 1 Gew.-%, besonders bevorzugt maximal 0,5 Gew.-% und insbesondere 0,2 Gew.-%, jeweils bezogen auf das Gesamtgewicht der Komponenten (b) bis (e). Dabei bezieht sich der Wassergehalt auf freies Wasser, das der Reaktion mit Isocyanat zu Verfügung steht. Gebundenes Wasser, beispielsweise in Wasserfängern gebundenes Wasser, wird bei der Bestimmung des maximalen Wassergehalts nicht berücksichtigt.

Als Fasermaterial können alle Arten von Endlosfasern verwendet werden. Dabei wird unter Endlosfaser ein Fasermaterial verstanden, das eine Länge von mindestens mehreren Metern aufweist. Diese werden beispielsweise von Rollen abgewickelt. Dabei können als Fasermaterial Einzelfasern, sogenannte Faserrovings, geflochtene Fasern, Fasermatten, Fasergelege und Fasergewebe eingesetzt werden. Insbesondere bei Faserverbünden, wie geflochtenen Fasern, verdrillten Fasern, Fasergelegen oder Fasergeweben können in die in diesen Fasergebilden enthaltenen Einzelfasern auch kürzere Einzelfasern enthalten sein, der Faserverbund selbst muss aber als Endlosmaterial vorliegen. Vorzugsweise enthält oder besteht das Fasermaterial aus Glasfaser, Glasmatten, Kohlefaser, Polyesterfaser, Naturfaser, Aramidfaser, Basaltfaser oder Nylonfaser und Kombinationen davon, besonders bevorzugt werden Carbonfasern bzw. Glasfasern sowie Kombinationen aus Carbonfasern und Glasfasern eingesetzt.

Die Benetzung des Fasermaterials erfolgt vorzugsweise einem geschlossenen Werkzeug. Vorzugsweise beträgt die Temperatur beim Benetzen des Fasermaterials weniger als 100 °C, vorzugsweise 0 bis 75 °C, besonders bevorzugt 10 bis 50 °C und insbesondere 15 bis 35 °C. Der Anteil an Fasermaterial beträgt dabei vorzugsweise 10 bis 90 Gew. % besonders bevorzugt 30 bis 90 Gew. % insbesondere 60 bis 90 Gew. % bezogen auf das fertige Pultrudat.

Nach dem Benetzen zieht man vorzugsweise das mit der Reaktionsmischung benetzte Fasermaterial durch ein Formwerkzeug. Dabei kann das Formwerkzeug eine beliebige, aber möglichst konstante Querschnittsform, senkrecht zur Zugrichtung des benetzten Fasermaterials aufweisen, beispielsweise schlitzförmig oder rund sein, eine L-Form, eine T-Form oder auch komplexere Formen aufweisen. Dabei weist das Formwerkzeug vorzugsweise eine Temperatur von 150 bis 250 °C auf, wodurch die Polyurethanreaktionsmischung zum fertigen Polyurethan aushärtet.

Vorzugsweise wird das Pultrudat aus der Form mit einer Geschwindigkeit von mehr als einem Meter pro Minute abgezogen. Besonders bevorzugt beträgt die Abzugsgeschwindigkeit mehr als 1,5 Meter pro Minute und insbesondere mehr als 2,0 Meter pro Minute. Das erhaltene Pultrudat wird üblicherweise auf die gewünschte Länge zugeschnitten. In einer besonders bevorzugten Ausführungsform weist das Pultrudat einen Querschnitt auf, der sich vom Flachprofil unterscheidet, beispielsweise L, V oder U-Profile oder Profile, die eine höhere Komplexität aufweisen.

Ein weiterer Gegenstand der vorliegenden Erfindung ist ein Pultrudat, erhältlich nach dem erfindungsgemäßen Verfahren. Dabei weist das Pultrudat eine exzellente Oberflächengüte und Benetzungsqualität auf. Die mechanischen Werte der Pultrudate sind bei Abzugsgeschwindigkeiten von 0,5 m/min und Abzugsgeschwindigkeiten von 1,5 m/min bei Flachprofilen gleich.

Im Folgenden soll die Erfindung anhand von Beispielen verdeutlicht werden:

### Einsatzstoffe:

Polyol 1: Glyceringestartetes Polypropylenoxid mit einer OH-Zahl von 400 mg KOH/g
Polyol 2: Glyceringestartetes Polypropylen/polyethylenoxid mit einer Funktionalität von 2,7 und einer OH-Zahl von 42 mg KOH/g
Polyol 3: Glyceringestartetes Polypropylenoxid mit einer OH-Zahl von 805 mg KOH/g
Polyol 4: Polypropylenglycol mit einer OH-Zahl von 55 mg KOH/g
Polyol 5: Dipropylenglycol
Kat 1: mit Phenol blockiertes 1,8-Diaza-bicyclo(5.4.0)undec-7-en (Molverhältnis 1 : 1)
Kat 2: Kaliumacetat in Monoethylenglykol gelöst, (Gewichtsverhältnis 2:3)
IMR 1: Fettsäurebasiertes Formtrennmittel
pH-Wert: pH-Wert der Polyolkomponente
Iso 1: polymeres Diphenylmethandiisocyanat
Iso 2: monomeres Diphenylmethandiisocyanat
Iso 3: Monomeres Diphenylmethandiisocyanat enthaltend carbodiimidmodifiziertes Diphenylmethandiisocyanat
Säure: Phosphorsäure
Puffer: Puffersystem, enthaltend Dinatriumhydrogenphosphat und Natriumdihydrogenphosphat

In einem Werkzeug aus chromiertem Stahl wurden Profile mit einem rechteckigem Querschnitt (35 x 4 mm²) und einem Faservolumengehalt von ca. 54 Vol. % bei Abzugsgeschwindigkeiten von 0,2-1,0 m/min gefertigt. Dabei wurde als Fasermaterial die Glasfaser Typ StarRov 907 4800 tex der Firma Johns Manville Slovakia eingesetzt.

Die genaue Zusammensetzung der Polyurethansysteme sowie eine Charakterisierung der erhaltenen Pultrudate ist in Tabelle 1 zusammengefasst. Dabei wurden in einem ersten Schritt eine Polyolkomponente hergestellt und deren pH-Wert variiert. Dabei enthielt Vergleichsversuch 1 keinerlei pH-Wert regulierender Zusätze, Vergleich 2 enthielt Phosphorsäure.

**Tabelle 1**

| | V 1 | V 2 | Bsp 1 | Bsp 2 | Bsp 3 | Bsp 4 | Bsp 5 | Bsp 6 |
|---|---|---|---|---|---|---|---|---|
| Polyol 1 | 45,0 | 45,0 | 45,0 | 45,0 | 45,0 | 45,0 | 43,3 | 43,3 |
| Polyol 2 | 4,5 | 4,5 | 4,5 | 4,5 | 4,5 | 4,5 | | |
| Polyol 3 | 44,5 | 44,5 | 44,5 | 44,5 | 44,5 | 44,5 | | |
| Polyol 4 | | | | | | | 26,3 | 26,3 |
| Polyol 5 | | | | | | | 25 | 25 |
| Kat 1 | 0,5 | 0,5 | 0,1 | 0,1 | 0,7 | 0,7 | 0,2 | 0,2 |
| Kat 2 | | | | | | | 0,2 | 0,2 |
| IMR 1 | 6,5 | 6,5 | 6,5 | 6,5 | 6,5 | 6,5 | 5,0 | 5,0 |
| Puffer | nein | nein | ja | ja | ja | ja | ja | ja |
| Säure | | ja | | | | | | |
| pH-Wert | 8,8 | 6,0 | 8,0 | 8,0 | 8,0 | 8,0 | 8,01 | 8,01 |
| Summe | 101,0 | 101,0 | 100,6 | 100,6 | 101,2 | 101,2 | 100,0 | 100,0 |
| | | | | | | | | |
| Iso 1 | 50,0 | 50,0 | 50,0 | 50,0 | 50,0 | 50,0 | | |
| Iso 2 | 50,0 | 50,0 | 50,0 | 50,0 | 50,0 | 50,0 | | |
| Iso 3 | | | | | | | 100 | 100 |
| Summe | 100,0 | 100,0 | 100,0 | 100,0 | 100,0 | 100,0 | 100,0 | 100,0 |
| | | | | | | | | |
| MV | 100:152 | 100:152 | 100:152 | 100:152 | 100:152 | 100:152 | 100:140 | 100:155 |
| Index | 121 | 121 | 121 | 121 | 121 | 121 | 136 | 150 |
| | | | | | | | | |
| Geschwindigkeit [m/min] | sofort festgefahren | sofort festgefahren | 1,5 | 2,5 | 1,5 | 0,5 | 1 | 1 |
| Abzugskräfte [kN] | - | - | 1,5-3,0 | 2,0-4,0 | 5,0-6,0 | 0,5-2,0 | 5,0-6,0 | 5,0-6,0 |
| Oberfläche | - | - | sehr gut, kein Puder | sehr gut, kein Puder | sehr gut, kein Puder | sehr gut, kein Puder | sehr gut, kein Puder | sehr gut, kein Puder |

Tabelle 1 zeigt, dass bei Einstellung des pH-Werts in den Bereich 6,5 bis 8,5 Pultrudate mit besonders niedrigen Abzugskräften und hervorragenden Oberflächen erhalten wurden. Dabei wurde der pH-Wert mit einer Glaselektrode bestimmt (DMP Titrino 785 Messgerät mit einer Methrom 6.0229.100 Elektrode). Als Kalibrierlösungen wurden Kalibrationslösungen von Methrom, Puffer pH 4, Phosphatpuffer pH 7 und Boratpuffer pH 9 eingesetzt.

## Patentansprüche

1. Verfahren zur Herstellung eines Pultrudats beidem man
a) Di- oder Polyisocyanate,
b) Verbindungen mit mindestens zwei gegenüber Isocyanaten reaktiven Gruppen,
c) Katalysator,
d) Formtrennmittel und gegebenenfalls
e) weitere Hilfs- und Zusatzstoffe,
zu einem Pultrusionsharzsystem vermischt und ein Fasermaterial damit benetzt und aushärtet, wobei die Di und Polyisocyanate (a) mit einer Polyolkomponente (B), enthaltend Verbindungen mit mindestens zwei gegenüber Isocyanaten reaktiven Gruppen (b), Katalysatoren (c) Formtrennmittel (d) und gegebenenfalls weitere Hilfs- und Zusatzstoffe (e) vermischt werden und die Polyolkomponente (B) einen pH-Wert von 6,5 bis 8,5 aufweist.

2. Verfahren zur Herstellung eines Pultrudats nach Anspruch 1, **dadurch gekennzeichnet, dass** der Gehalt an Wasser in der Polyolkomponente (B) kleiner als kleiner als 1 Gew.-%, bezogen auf das Gesamtgewicht der Komponente (B), ist.

3. Verfahren zur Herstellung eines Pultrudats nach Anspruch 1 oder 2, **dadurch gekennzeichnet, dass** die Polyolkomponente (B) ein Puffersystem, enthaltend mehrbasige anorganische Säuren, umfasst.

4. Verfahren zur Herstellung eines Pultrudats nach einem der Ansprüche 1 bis 3, **dadurch gekennzeichnet**, die Katalysatoren (c) Aminkatalysatoren umfassen.

5. Verfahren zur Herstellung eines Pultrudats nach einem der Ansprüche 1 bis 4, **dadurch gekennzeichnet**, die Formtrennmittel Fettsäure und/oder Fettsäureester enthält.

6. Verfahren zur Herstellung eines Pultrudats nach einem der Ansprüche 1 bis 5, **dadurch gekennzeichnet, dass** als Di- und Polyisocyanate (a) polymeres MDI mit einer mittleren Funktionalität von 2,1 bis 2,8 eingesetzt wird.

7. Verfahren zur Herstellung eines Pultrudats nach einem der Ansprüche 1 bis 6, **dadurch gekennzeichnet, dass** die Verbindungen mit mindestens zwei gegenüber Isocyanaten reaktiven Gruppen (b) Polyetherole mit einer mittleren Funktionalität von 2 bis 4 und einem Gehalt an sekundären OH-Gruppen vom mindestens 50 % aufweisen.

8. Verfahren zur Herstellung eines Pultrudats nach einem der Ansprüche 1 bis 7, **dadurch gekennzeichnet, dass** die Verbindungen mit mindestens zwei gegenüber Isocyanaten reaktiven Gruppen (b) eine mittlere OH-Zahl von 100 bis 1000 mg KOH/g aufweist.

9. Verfahren zur Herstellung eines Pultrudats nach einem der Ansprüche 1 bis 8, **dadurch gekennzeichnet, dass** das Pultrusionsharzsystem unmittelbar nach Vermischen eine Viskosität von kleiner 1500 mPas bei 25 °C aufweist.

10. Verfahren zur Herstellung eines Pultrudats nach einem der Ansprüche 1 bis 9, **dadurch gekennzeichnet, dass** das Pultrusionsharzsystem weniger als 2,0 Gew.-% Stoffe enthält, die einen Siedepunkt von kleiner 200 °C bei Normaldruck aufweisen.

11. Verfahren nach einem der Ansprüche 1 bis 10, **dadurch gekennzeichnet, dass** man das benetzte Fasermaterial durch ein Formwerkzeug zieht und aushärtet, wobei das Formwerkzeug eine Temperatur von 150 °C bis 250 °C aufweist.

12. Verfahren nach einem der Ansprüche 1 bis 11, **dadurch gekennzeichnet, dass** die Abzugsgeschwindigkeit, mit der das benetzte Fasermaterial durch die Form gezogen wird, größer als ein Meter pro Minute ist.

13. Verfahren nach einem der Ansprüche 1 bis 12, **dadurch gekennzeichnet, dass** der Gehalt an Fasermaterial 30 bis 90 Gew.-% beträgt.

14. Pultrudat, herstellbar nach einem Verfahren gemäß einem der Ansprüche 1 bis 13.

## Claims

1. A process for the production of a pultrudate by mixing
a) di- or polyisocyanates,
b) compounds having at least two groups reactive toward isocyanates,
c) catalyst,
d) mold-release agent and optionally,
e) other auxiliaries and additional substances, to give a pultrusion resin system, and wetting and hardening a fiber material therewith, where the di- and polyisocyanates (a) are mixed with a polyol component (B), comprising compounds having at least two groups (b) reactive toward isocyanates, catalysts (c), mold-release agent (d) and optionally other auxiliaries and additional substances (e), and the pH of polyol component (B) is from 6.5 to 8.5.

2. The process for the production of a pultrudate according to claim 1, wherein the water content in polyol component (B) is less than less than 1% by weight, based on the total weight of component (B).

3. The process for the production of a pultrudate according to claim 1 or 2, wherein polyol component (B) comprises a buffer system comprising polybasic inorganic acids.

4. The process for the production of a pultrudate according to any of claims 1 to 3, wherein the catalysts (c) comprise amine catalysts.

5. The process for the production of a pultrudate according to any of claims 1 to 4, wherein the mold-release agent comprises fatty acid and/or fatty acid ester.

6. The process for the production of a pultrudate according to any of claims 1 to 5, wherein di- and polyisocyanates (a) used comprise polymeric MDI with average functionality from 2.1 to 2.8.

7. The process for the production of a pultrudate according to any of claims 1 to 6, wherein the compounds having at least two groups (b) reactive toward isocyanates comprise polyetherols with average functionality from 2 to 4 and with at least 50% content of secondary OH groups.

8. The process for the production of a pultrudate according to any of claims 1 to 7, wherein the average OH number of the compounds having at least two groups (b) reactive toward isocyanates is from 100 to 1000 mg KOH/g.

9. The process for the production of a pultrudate according to any of claims 1 to 8, wherein the viscosity of the pultrusion resin system immediately after mixing is less than 1500 mPas at 25 °C.

10. The process for the production of a pultrudate according to any of claims 1 to 9, wherein the pultrusion resin system comprises less than 2.0% by weight of substances that have a boiling point below 200°C at standard pressure.

11. The process according to any of claims 1 to 10, wherein the wetted fiber material is drawn through a mold and hardened, where the temperature of the mold is from 150°C to 250°C.

12. The process according to any of claims 1 to 11, wherein the take-off velocity at which the wetted fiber material is drawn through the mold is greater than one meter per minute.

13. The process according to any of claims 1 to 12, wherein the fiber material content is from 30 to 90% by weight.

14. A pultrudate that can be produced by a process according to any of claims 1 to 13.

## Revendications

1. Procédé de fabrication d'un pultrudat, selon lequel
a) des di- ou polyisocyanates,
b) des composés contenant au moins deux groupes réactifs avec les isocyanates,
c) un catalyseur,
d) un agent de démoulage, et éventuellement
e) des adjuvants et additifs supplémentaires,
sont mélangés pour former un système de résine de pultrusion, et un matériau fibreux est mouillé avec celui-ci et durci, les di- et polyisocyanates (a) étant mélangés avec un composant polyol (B), contenant des composés qui contiennent au moins deux groupes réactifs avec les isocyanates (b), des catalyseurs (c), des agents de démoulage (d) et éventuellement des adjuvants et additifs supplémentaires (e), et le composant polyol (B) présentant un pH de 6,5 à 8,5.

2. Procédé de fabrication d'un pultrudat selon la revendication 1, **caractérisé en ce que** la teneur en eau dans le composant polyol (B) est inférieure à inférieure à 1 % en poids, par rapport au poids total du composant (B).

3. Procédé de fabrication d'un pultrudat selon la revendication 1 ou 2, **caractérisé en ce que** le composant polyol (B) comprend un système tampon, contenant des acides inorganiques polybasiques.

4. Procédé de fabrication d'un pultrudat selon l'une quelconque des revendications 1 à 3, **caractérisé en ce que** les catalyseurs (c) comprennent des catalyseurs aminés.

5. Procédé de fabrication d'un pultrudat selon l'une quelconque des revendications 1 à 4, **caractérisé en ce que** l'agent de démoulage contient un acide gras et/ou un ester d'acide gras.

6. Procédé de fabrication d'un pultrudat selon l'une quelconque des revendications 1 à 5, **caractérisé en ce que** du MDI polymère ayant une fonctionnalité moyenne de 2,1 à 2,8 est utilisé en tant que di- et polyisocyanates (a).

7. Procédé de fabrication d'un pultrudat selon l'une quelconque des revendications 1 à 6, **caractérisé en ce que** les composés contenant au moins deux groupes réactifs avec les isocyanates (b) comprennent des polyétherols ayant une fonctionnalité moyenne de 2 à 4 et une teneur en groupes OH secondaires d'au moins 50 %.

8. Procédé de fabrication d'un pultrudat selon l'une quelconque des revendications 1 à 7, **caractérisé en ce que** les composés contenant au moins deux groupes réactifs avec les isocyanates (b) présentent un indice OH moyen de 100 à 1 000 mg de KOH/g.

9. Procédé de fabrication d'un pultrudat selon l'une quelconque des revendications 1 à 8, **caractérisé en ce que** le système de résine de pultrusion présente immédiatement après le mélange une viscosité de moins de 1 500 mPas à 25 °C.

10. Procédé de fabrication d'un pultrudat selon l'une quelconque des revendications 1 à 9, **caractérisé en ce que** le système de résine de pultrusion contient moins de 2,0 % en poids de substances qui présentent un point d'ébullition de moins de 200 °C à pression normale.

11. Procédé selon l'une quelconque des revendications 1 à 10, **caractérisé en ce que** le matériau fibreux mouillé est tiré au travers d'un outil de moulage et durci, l'outil de moulage présentant une température de 150 °C à 250 °C.

12. Procédé selon l'une quelconque des revendications 1 à 11, **caractérisé en ce que** la vitesse de tirage à laquelle le matériau fibreux mouillé est tiré au travers du moule est supérieure à un mètre par minute.

13. Procédé selon l'une quelconque des revendications 1 à 12, **caractérisé en ce que** la teneur en matériau fibreux est de 30 à 90 % en poids.

14. Pultrudat, pouvant être fabriqué par un procédé selon l'une quelconque des revendications 1 à 13.
